# EUROPEAN PATENT APPLICATION

(11) **EP 4 606 468 A1**
(43) Date of publication of application: **27.08.2025**
(21) Application number: 24020065.9
(22) Date of filing: 23.02.2024
(51) Int. Cl.: B01J 3/00, B01J 8/06, B01J 19/00, B01J 19/08, C10G 9/00, F22B 1/18, F27B 3/08

(54) **METHOD AND APPARATUS FOR PRODUCING A REACTION PRODUCT USING A HEATED REACTOR**

(71) Applicant: Linde GmbH, 82049 Pullach (DE)
(72) Inventor: Eberstein, Christopher, 82049 Pullach (DE); Sinn, Tobias, 82049 Pullach (DE)

(57) **Abstract**

A method for producing a reaction product using an apparatus (100, 200, 300) comprising a heated reactor (F) is proposed, wherein a reaction feed (5) is supplied to the reactor and a reactor effluent (1) is withdrawn from the reactor (F), wherein heat of the reactor effluent (1) is transferred to a heat carrier medium (2), wherein heat of the heat carrier medium (2) is transferred to a heat sink, and wherein the heat carrier medium (2) is provided in a cycle in which the heat carrier medium (2) is compressed using a cycle compressor (C1). A corresponding apparatus (100, 200, 300) for performing the method is also proposed herein.

## Description

The present disclosure relates to a method and an apparatus for producing a reaction product using a heated reactor.

### Background

The steam cracking technology for production of olefins and other base chemicals is well known. At present, the thermal energy required for running the endothermic steam cracking reactions is typically provided by the combustion of fuel gas in a furnace refractory. The actual process gas flows through so-called cracking coils placed inside the refractory, also called radiant zone. In addition to the radiant zone, fired cracking furnaces further comprise a convection section and a quench section.

As further discussed below, recent efforts to reduce carbon dioxide emissions of steam crackers include substituting at least a part of the fuel gas by electric energy. Reference is made to expert literature such as M.E.H Tijiani et al., "Review of Electric Cracking of Hydrocarbons", ACS Sustainable Chem. Eng. 2022, 10, 49, 16070-16089. As also discussed below, however, using electric energy as heat source for steam cracking also may require a substantial redesign of the periphery to the reactor or furnace, particularly because of the fact that heat from a convection section is no more available for process duties such as preheating of boiler feed water and/or hydrocarbon feeds, (partial) vaporization of liquid hydrocarbon feeds (with or without process steam injection) and superheating of process steam and high-pressure steam.

Aspects disclosed herein are not limited to steam cracking but likewise may be applicable to other chemical reactions wherein heated furnaces are used, particularly endothermal reactions as discussed below. Furthermore, aspects as disclosed herein are not limited to electrified reactors, but likewise apply for fired reactors.

There is a need for improved methods and apparatus for processes using a heated reactor, particularly using electric energy as a heat source.

### Summary

Against this background, methods and apparatus including the features of the independent claims are proposed. Embodiments are the subject of the independent claims and of the description that follows.

The method for producing a reaction product proposed herein includes using an apparatus comprising a heated reactor, wherein a reaction feed is supplied to the reactor and a reactor effluent is withdrawn from the reactor, wherein heat of the reactor effluent is transferred to a heat carrier medium, wherein heat of the heat carrier medium is transferred to a heat sink, and wherein the heat carrier medium is provided in a cycle in which the heat carrier medium is compressed using a cycle compressor. The heat sink may in particular be a feed to the reactor and/or components thereof, such as a mixture of hydrocarbons and steam and/or the hydrocarbons and/or the steam individually, and/or parts of such stream.

The method as proposed herein provides a number of advantages which are extensively discussed below, and which include an effective heat transfer from the reactor effluent to the heat sink without substantial danger of fouling as may be observed with other approaches, such as feed effluent heat exchangers.

According to certain embodiments, compression heat generated when the heat carrier medium is compressed using the cycle compressor is at least in part transferred with the heat carrier medium to the heat sink. Such embodiments include an advantageous use of the heat carrier medium as a part of a heat pump, as further explained below. Briefly, such embodiments allow for closing a gap between available heat (from the reactor effluent) and required heat (for the heat sink such as the reactor feed or its components) by the compression heat. This advantage comes in particular with the advantage of an improved heat transfer to a denser, compressed medium.

According to certain embodiments, the reactor is used to perform an endothermic reaction process to produce the reaction product. Embodiments as disclosed herein are universally applicable for different reactions and particularly provide effective solutions for performing a heat transfer from the effluent to the heat sink.

According to certain embodiments, the reaction process is selected from a steam cracking process, an autothermal reforming process, a steam methane reforming process or combinations thereof. It is particularly these reactions which take profit from the instrumentalities as proposed herein.

According to certain embodiments, the reactor is a fired reactor in which a flue gas is produced, wherein heat of the flue gas is used for at least one of process and boiler feed water/steam heating and combustion air preheating. That is, according to such embodiments, flue gas heat may be put to other advantageous uses while still a proper heating of feed as the heat sink becomes possible.

According to certain other embodiments, the reactor is an electrically heated reactor not producing a flue gas. The reactor may also be partly electrified such that a reduced amount of flue gas is available. The instrumentalities as proposed herein enable for an effective heating of feed as the heat sink also in such situations.

According to certain embodiments, the heat carrier medium is provided in the cycle in a dense gas phase or supercritical state (these terms being used as customary in the field) and does not undergo a phase change in the heat cycle. Therefore, a more effective heat transfer from the reactor effluent to the heat carrier medium is possible, in contrast to a gaseous state of a medium with a lower density as proposed herein.

In certain embodiments, a temperature profile of the heat carrier medium in the cycle is provided such that a temperature of the heat carrier medium in a heat exchanger used for the transfer of heat of the reactor effluent to the heat carrier medium does not exceed a predetermined temperature value. Particularly, this avoids exceeding certain surface temperatures in the heat exchanger and reduces fouling.

According to certain embodiments, the heat carrier medium comprises, but is not limited to, at least one of argon, helium, nitrogen, air and a hydrocarbon. Such components are particularly advantageous because they withstand the generally high temperatures involved in the method as disclosed herein.

According to certain embodiments, further heat of the reactor effluent is transferred to a further medium. That is, if heat of the reactor effluent is available in an amount exceeding the specific needs, e.g. for heating feed, a partial amount may be transferred to other media, particularly in a heat exchanger downstream of a heat exchanger for heat transfer to the original heat transfer medium.

According to certain embodiments, a pressure drop of the heat carrier medium in the cycle is 5 to 20 bar. This allows for certain configurations of heat transfer equipment with heat transfer enhancement features, such as impingement coolers in which jets of the cooling medium, i.e. the heat transfer medium, are formed and made to impinge on a structure in which the medium to be cooled, which is the reactor effluent in case of the present disclosure, is guided.

According to certain embodiments, the transfer of the heat from the reactor effluent to the heat carrier medium is performed using a heat exchanger in which the reactor effluent supplied to and cooled in an inner tube and the heat carrier medium is supplied to and heated in an outer tube disposed about the inner tube to enclose an annulus about the inner tube, the annulus comprising features for heat transfer enhancement. This allows for an effective heat transfer even in the situation discussed herein where the heat transfer medium is in a non-liquid state.

According to certain embodiments, the features for heat transfer enhancement include features for fluid impingement, turbulence promotion, high shear-inducing geometry, or increased surface area. Particularly, impingement coolers including so-called piccolo or plate impingement structures as generally known in the field may be used.

According to certain embodiments, heat of the heat carrier medium is be transferred to an organic rankine cycle using an expander driving the cycle compressor, particularly together with an electric motor. This allows for residual heat to be effectively used and reduces the (electric) energy required for driving the cycle compressor.

An apparatus for producing proposed herein comprises a heated reactor, wherein the apparatus is configured to supply a reaction feed to the reactor, to withdraw a reactor effluent from the reactor, to transfer heat of the reactor effluent to a heat carrier medium, to transfer heat of the heat carrier medium to a heat sink, and to provide the heat carrier medium in a cycle in which the heat carrier medium is compressed using a cycle compressor.

As to further details and advantages of such an apparatus, reference is made to the explanations above in regarding the method proposed herein and its different embodiments. Particularly, such an apparatus may, in embodiments as proposed herein, comprise means adapted to perform a method according to any of the embodiments as discussed herein.

### Figures

Embodiments as disclosed herein will now be described, by way of example only, with reference to accompanying drawings, in which
Figure 1 illustrates an apparatus according to an embodiment;
Figure 2 illustrates an apparatus according to an embodiment; and

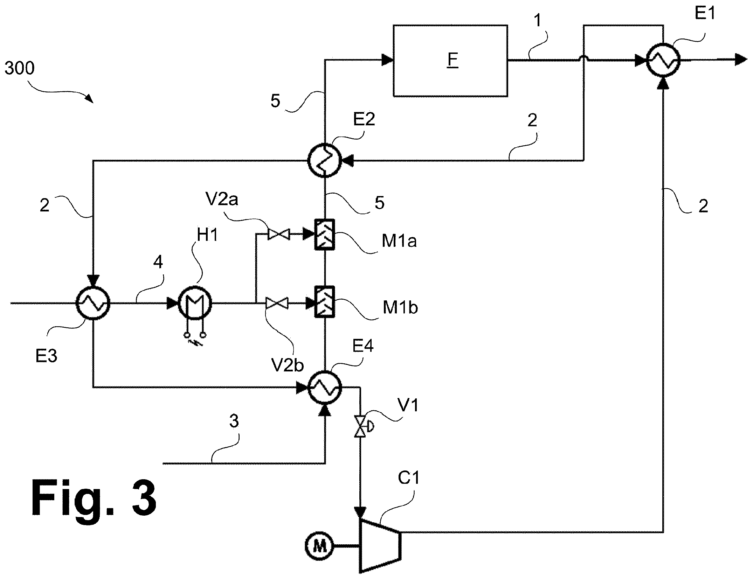

Figure 3 illustrates an apparatus according to an embodiment.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Methods and apparatus for steam cracking are described in expert literature such as, for example, in the article "Ethylene" in Ullmann's Encyclopedia of Industrial Chemistry, online publication 15 April 2009, DOI: 10.1002/14356007. a10_045.pub2, in the article by Tijiani et al. cited at the outset, and in EP 4 305 344 A1 by the present applicant. Certain wording used herein for elements of steam cracking apparatus and corresponding method steps shall have the meaning as customary.

In a radiant section of a fired steam cracker, the process gas is continuously heated up on its flow path through the coils in the furnace, enabling the desired cracking reactions to take place inside the coils. Typical inlet temperatures for the process gas into the coils lie between 550 and 750 °C, and the outlet temperatures from the coils are typically in the range between 800 and 900 °C.

The convection zone in a fired steam cracker is usually positioned above the radiant zone and comprises various tube bundles traversing the flue gas duct. The convection zone has the function to recover as much energy as possible from the hot flue gas leaving the radiant zone. Indeed, only 35 to 50% of the total firing duty is typically transferred to the process gas flowing through the cracking coils. The convection section therefore plays a central role in the energy management of a fired steam cracker, as it is responsible for the beneficial usage of approximately 40 to 60% of the heat input into a furnace (i.e. of the firing duty).

Indeed, when taking radiant and convection zone together, modern fired steam cracker plants may make use of 90 to 95% of the overall fired duty (based on the lower heating value of the combusted fuel). Consequently, the flue gas is typically cooled down to temperature levels between 120 and 160 °C before leaving the convection section and being released to the atmosphere via stack.

As mentioned at the outset, the flue gas heat recovered in the convection section of a fired steam cracker is typically used for process duties such as preheating of boiler feed water and/or hydrocarbon feeds, (partial) vaporization of liquid hydrocarbon feeds (with or without process steam injection) and superheating of process steam and high-pressure steam. In convection sections of low-emission furnaces with combustion air preheating, the energy recovered from flue gas can also be used directly or indirectly to preheat the combustion air before entering the burners arranged in the radiant zone.

In the process scheme, the quench section is positioned downstream of the radiant section along the main process gas route. It comprises one or more heat exchanger units, having the functions of quickly cooling the process below a maximum temperature level to stop the cracking reactions, to further cool down the process gas for downstream treatment, and to effectively recover sensible heat from the process gas for further energetic usage. In addition, further cooling/quenching can be realized via injection of liquids, e.g. oil quench cooling in liquid feed crackers.

The process gas heat recovered in the quench section can typically be used for vaporizing (super-)high-pressure boiler feed water (of a typical pressure range between 30 and 125 bar absolute pressure), and for preheating the same boiler feed water, before it being fed to a steam drum. The generated high-purity (super-)high-pressure steam is then superheated in the convection zone (see above), and from there distributed to the central steam system of the cracker plant, providing heat and power used in heat exchangers and steam turbines. The typical degree of steam superheating achieved in furnace convection zones lies between 150 and 250 K above the saturation temperature (dew point margin).

In EP 3 415 587 A1, a modified convection zone and quench section setup for fired furnaces with air preheating are proposed, wherein a mixture of hydrocarbon feed and process steam is directly heated against process gas in a quench exchanger. Nevertheless, the concepts are strictly bound to the existence of a convection zone and is explicitly limited to fired furnaces.

With the perspective of the transition from fossil fuel firing to renewable energy usage, new developments arise with respect to replacing fired cracking furnaces by electrically heated ones. This may, as mentioned at the outset, require a substantial redesign of steam cracker plants, and requires solutions coping with substantially different heat balance and available waste heat in electrically heated steam cracking.

With a method proposed herein, an advantageous energy integration concept into a full furnace architecture (including preheating and quench sections), and therefore into a wider cracker plant architecture is provided. The efficient and effective integration of electric furnaces into a steam cracker as proposed herein is of paramount importance for the overall plant design, in particular regarding energy management. Methods as proposed herein address major difficulties arising from the fact that electrically heated furnaces do not comprise a convection zone. This is of such importance, since it was already mentioned that in fired cracking furnaces 40 to 60% of the overall heat input is recovered in the convection zone and used for various purposes.

According to the present disclosure, a solution how to balance and distribute heat quantities in a low- to zero-emission steam cracker featuring some, mostly or exclusively electric furnaces is provided. Concepts and solutions as proposed herein are suitable for designing electric furnace systems that fulfil duties or requirements including electrically heating a premixed feed of hydrocarbons and steam to a cracking coil from inlet temperatures between 550 and 750 °C to outlet temperatures between 800 and 900 °C, thereby achieving cracking yields similar or better as the ones obtained in fired cracking furnaces, to preheat and, in case of liquid feeds, vaporize hydrocarbon feed streams from typical supply temperatures between 20 and 150 °C to the above mentioned coil inlet temperatures between 550 and 750 °C.

The preheating and vaporization of the hydrocarbon feed is to be made with or without previous addition of superheated process steam, typically supplied to the furnace system at a temperature level between 130 and 200 °C. Furthermore, duties or requirements that are fulfilled are effectively and very rapidly cooling down the process gas downstream of the cracking coil to temperature levels of 300 to 450 °C (liquid feedstocks) or 150 to 300 °C (gaseous feedstocks) in one or more multi-stream heat exchangers, allowing for heat recovery from the process gas, and to balance energy flows between the furnace system and its periphery to ensure safe, reliable and efficient operation.

The existing state-of-the-art technology contains no example on how to solve these tasks simultaneously, because all fired furnace integration concepts strictly rely on the existence of a convection zone, in which heat is recovered from a hot flue gas stream and typically transferred to the hydrocarbon feedstock, the process steam, boiler feed water and the (very) high pressure steam.

There is also another aspect to be considered, which is that electrically powered drives of rotating equipment have a superior efficiency of typically more than 90% than conventional steam turbines, which is typically only 30 to 40%. The lack of excessive heat from a convection section and the availability of electrical power from renewable sources increase the incentive to utilize energy recovered from cracked gas cooling for process heating instead of powering pumps and compressors. A conventional cracked gas quench based on steam production cannot be considered the method of choice, therefore. More efficient ways of integrating the heat need to be identified.

In previous disclosures, there is no mention about how to supply usable process heat to the wealth of other process heat consumers in a steam cracker plant and adjacent chemical complex. For some embodiments disclosed in WO 2020/150244 A1, for example, it is specifically mentioned that steam shall not be used as a primary energy carrier and to either directly exchange heat from cracked gas to the feed streams or transfer heat indirectly by means of a heat-transfer fluid. One embodiment in this publication explicitly mentions the utilization of nitrogen, methane or carbon dioxide at the pyrolysis reaction section for primary quench of the cracked gas.

Indirect or direct transfer of cracked gas heat to the furnace feed is indeed a highly promising approach which stands out through a reduced energy consumption of the electrified ethylene plant. This has been disclosed, for example, in heat integration concepts of EP 4 056 894 A1, that rely on a direct exchange of (at least a portion of) heat from cracked gas to feed streams.

However, an energy recovery unit for cracked gas cooling needs to fulfil specific requirements to ensure product yields and furnace run length. Rapid cracked gas quenching within a short residence time combined with low pressure drop is conventionally realized in "Transfer Line Exchangers" that utilize boiling water on the coolant side with high heat transfer coefficients.

The above-mentioned publications do not answer how it is intended to tackle these requirements with state-of the art technology when the coolant fluid is changed to a gaseous feed stream or any other heat carrier fluid such as nitrogen or methane with poor heat transfer coefficients. Compensation of poor heat transfer coefficients by relying on large temperature differential between furnace effluent and cooling fluid cannot be considered as an option, as it provokes condensation of heavy hydrocarbons on the cracked gas side and fouling of the quench system. This leads to poor quench performance and consecutively to product yield losses. Apart from a poor process performance, small heat transfer coefficients lead to very large exchanger units up to a point where a constructability is highly questionable.

It is also not solved how cracked gas heat at elevated temperatures above 800 °C can be utilized for preheating the feed with state-of-the-art technology whilst controlling the risk of pre-cracking the feed hydrocarbons before entering the furnace cracking coils.

Another aspect to deal with is the imbalance of available cracked gas heat and heat required for feed preheating. Previous publications rely on a combination of a feed-effluent cracked gas quench exchanger ("FEX"), additional balance quench exchangers producing steam and electric feed preheating for balancing. But current state of technology for electric heating above 450 °C relies on low voltage process heating, which in turn means more transformer losses and a less efficient process. As for the steam producing quench exchangers, not every plant has a steam demand.

Therefore, alternatives without mandatory steam production have to be made available, and are made available according to the present disclosure.

Embodiments as disclosed herein relate to a novel heat integration concept using an intermediary heat carrier medium to transfer heat from a hot reactor effluent to the reactor feed stream for preheating. The negative difference between available heat from source and required heat in sink is closed by the heat of compression that is introduced into the heat carrier medium by the cycle compressor driving the cycle. The heat carrier may be a dense phase medium which does not exhibit a phase change in the cycle (e.g. nitrogen at about 60 bar absolute pressure). The heat carrier may be pumped by a compressor which may be driven by a motor on medium voltage power through a cycle, comprising of a cracked gas heat recovery device (wherein the cracked gas quench may be based on an impingement cooling concept such as disclosed in European patent application 23165609.1) and of several feed and dilution steam preheating devices (for example including tubular heat exchangers).

Embodiments proposed herein include the following features which may be optionally or obligatorily be provided as parts of the present invention, dependent of whether they are specifically claimed or not, and which may include:
1. Heat at high temperatures is recovered by an intermediary heat carrier medium from a heat source, e.g. a hot reactor effluent like cracked gas coming from steam cracking coils, and transferred to a heat sink, e.g. a hydrocarbon feed stream to a steam cracking furnace.
2. The intermediary heat carrier cycle is applied to an endothermic reaction process, e.g. a steam cracking process, which is characterized by
   a) utilization of flue gas heat from a fired reactor not only for process and boiler feed water/steam heating but also for combustion air preheating as an energy saving measure, or
   b) the absence of flue gas heat because of the electrical heating mechanism of the reactor, e.g. in an electrically heated steam cracking furnace.
3. Either 100% or only a portion of the available reactor effluent heat (in steam cracking: cracking coil outlet temperature to quench fitting or quench column inlet temperature) may be transferred to the intermediary heat carrier medium. If only a portion of the cracked gas heat is transferred to the intermediary heat carrier, the heat recovery is realized in a two-stage exchanger arrangement, the primary one cooled with the intermediary heat carrier medium, a secondary exchanger is cooled with a separate medium, e.g. boiler feed water, for raising steam or simply heating up the boiler feed water.
4. The intermediary heat carrier medium may be in a dense gas phase or supercritical state, as mentioned before, that does not undergo any phase change in the heat integration cycle.
5. The heat carrier medium may be thermally stable and may be characterized by a high specific volumetric heat capacity, which may be achieved by utilizing dense phase or even supercritical fluids, e.g. including argon, helium, nitrogen or hydrocarbons like methane or combinations thereof.
6. The heat carrier medium compressor may supply not only the driving force (head) to overcome pressure drop in the heat carrier cycle, but may also serve at the same time as a heat pump to balance out differences between the available heat from source to needed heat in sink.
7. Allowing a high pressure drop in the heat carrier cycle of 5 to 20 bar may enable the application of special features for heat transfer enhancement to realize in particular high heat transfer coefficients in the heat exchangers of the cycle as further explained in the next point.
8. Depending on the processes where the invention is applied to, the cooling performance of the heat recovery assembly may require similar behaviour as it is known from conventional steam raising quench exchanger designs. An example may include quenching of cracked gas from a steam cracking furnace requires a rapid cooling rate (such as 2 K/ms or above) with high heat transfer rates, short residence time (such as 100 ms or less) and small pressure drop such as 350 mbar or less). In combination with further aspects disclosed herein, this may be realized in an energy recovery device, where hot reactor effluent is supplied to and cooled in an inner tube of the device and the heat carrier medium is supplied to and heated in an outer tube disposed about the inner tube to enclose an annulus about the inner tube. This annulus comprises features for heat transfer enhancement to enhance heat transfer from the inner tube to the annulus. This feature can be fluid impingement, turbulence promotion, high shear-inducing geometry, or increased surface area. For further details how such a device could be realized, reference is made to European patent application 23165609.1 already mentioned above. The proposed concept deviates in such a way that the intermediary heat carrier medium replaces the hydrocarbon feed on the outer tube side of the device.
9. For naphtha steam cracking, the heat available in the intermediary heat carrier cycle covers the duties for hydrocarbon feed vaporization, superheating of dilution steam and further superheating of the hydrocarbon/steam mix up to the required inlet temperature to the cracking coils.
10. The temperature profile of the intermediary heat carrier cycle and consecutively tube wall temperature of the quench exchanger device are picked in such a way, that the risk for heavy hydrocarbon condensation of cracked gas at the cold end of the heat recovery device and pre-cracking of hydrocarbon feed at the hot end of the feed preheating exchangers is reduced or eliminated.
11. The heat carrier compressor can be a reciprocating or turbo compressor, driven by a steam turbine, electric motor or gas turbine.
12. In case the available reactor effluent heat, transferred to the heat carrier cycle, exceeds the required feed or process heat, residual heat could be transferred to an organic rankine cycle (ORC). The expander turbine of the organic rankine cycle can then be combined with the cycle compressor and the motor drive to a compander machine. Thus, the excess heat is transformed directly into power and reduces the overall power consumption of the system. This is particularly an option for gaseous feedstock like ethane or propane.

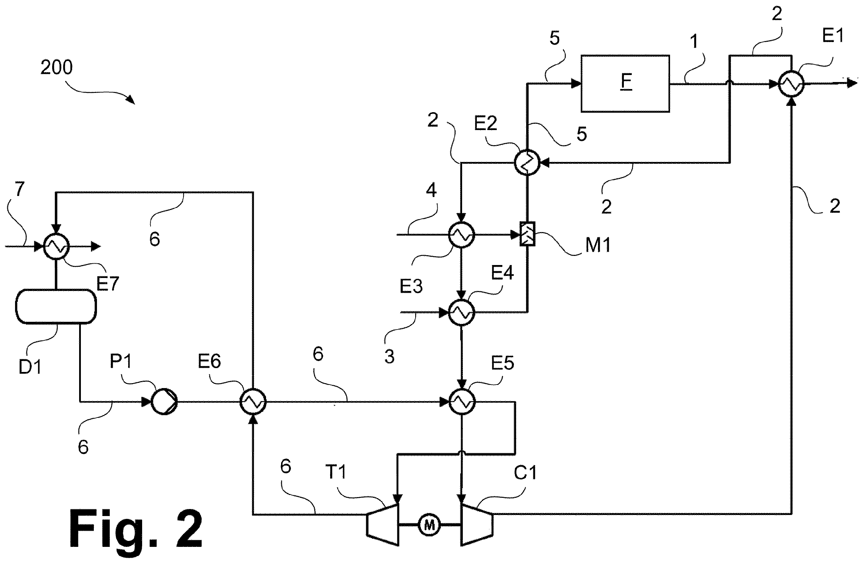

Embodiments as proposed herein will now be discussed in connection with the appended drawings, in which Figure 2 depicts an apparatus 100 according to an embodiment which may be configured for naphtha steam cracking in an electrically heated cracking furnace as an example of a heated reactor F.

Hot reactor effluent 1, i.e. cracked gas from naphtha steam cracking in electrically heated cracking furnace or heated reactor F, is rapidly and effectively cooled on the tube side of a gas/gas quench exchanger E1 to 360 to 420 °C against an intermediary heat carrier medium 2, in this case e.g. nitrogen.

The flow characteristics (pressure drop, turbulence regime, residence time, etc) of the reactor effluent 1 on the tube side of quench exchanger E1 are comparable to conventional linear quench exchangers. On the side of the heat carrier medium 2, the quench exchanger E1 may be equipped with features for heat transfer enhancement, e.g. impingement cooling nozzles or the like, for which 4 to 15 bar of pressure drop on the side of the heat carrier medium may be allowed to be consumed.

The heat carrier medium 2 is supplied to the quench heat exchanger E1 by a cycle compressor C1 at elevated pressure and elevated temperature, e.g. at about 60 bar absolute pressure and 280 °C, and it is heated by reactor effluent 1 to about 700 °C. The inlet and outlet temperature of the heat carrier medium 2 to and from quench heat exchanger E1 is chosen in such a way that the tube wall temperature on the side of the reactor effluent 1 does not exceed a critical temperature on the hot end nor fall below a critical temperature on the cold end to prevent excessive exchanger fouling by coking or condensation of heavy hydrocarbons.

Downstream of the quench heat exchanger E1, the heat carrier medium, which is indicated with 2 throughout to the cycle, is routed to a feed/steam superheater E2, where the heat carrier medium 2 is cooled to about 380 °C by superheating a mixture 5 of a hydrocarbon feed 3 and dilution steam 4, which are mixed in a mixing unit M1, from about 180 °C to the required coil inlet temperature of about 600 °C of the heated reactor F. Feed/steam superheater E2 may be (but is not necessarily) equipped with features for enhanced heat transfer on the side of the heat carrier medium 2, similarly to the quench heat exchanger E1. Further downstream, the heat carrier medium 2 is passed through a further heat exchanger E3, in which steam 4 is superheated from about 180 °C to about 300 °C and the heat carrier medium 2 is cooled to about 360°C.

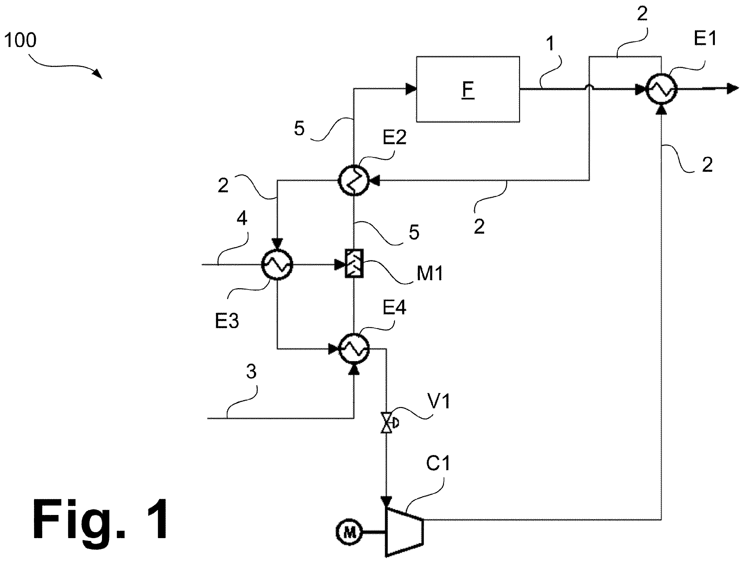

The remaining sensible heat of the heat carrier medium 2 is sufficient to partially vaporize hydrocarbon feedstock 3, e.g. naphtha, with a vapour phase at the outlet of about 0.75 in a fourth heat exchanger E4, where the heat carrier medium 2 is further cooled to about 240 °C and routed to the inlet of the cycle compressor C1 at a suction pressure pₛ determined by a discharge pressure p_{d} of the cycle compressor C1, a pressure drop dpₓ at the heat exchangers E1 to E4 and a pressure drop dp_{c} at a control device not shown in Figure 1 as pₛ = p_{d} - dpₓ - dp_{c}.

The heat carrier medium 2 is recompressed in the cycle compressor C1 and the cycle starts again. A valve V1 is provided for flow control and/or expansion.

The cycle compressor C1 in the loop of the heat carrier medium 2 may be a turbocompressor type machine, considering the large circulating mass and volume flows, driven by an electric motor (on medium voltage level), steam turbine or expander or a combination of expander and motor (compander). The feed 3 heating and vaporization can be achieved in conventional tubular type heat exchangers, whereas the cracked gas 1 cooling requires special heat exchangers with extraordinary high heat transfer coefficients, taking into account that heat is exchanged between two gas streams. This may particularly be realized in designs that rely on the above-mentioned special heat transfer enhancement features.

The cycle can be operated with any kind of heat carrier medium 2 that does not undergo a phase change (i.e. remains gaseous or supercritical) and whose molecules are thermally stable over the operating temperature and pressure range. Ideally, the medium has a high specific heat capacity and at the same time a higher molecular weight for technically easier compression in turbocompressors. Cases such as nitrogen, argon, helium and air (if leakage to process can be mitigated) are considered to be suitable for embodiments disclosed herein.

Particular liquid hydrocarbon feedstocks 3 like naphtha or gasoil requires more heat for preheating upstream of the cracking reaction in reactor F that it is available in the cracked gas at the cracking coil outlet. For example, 110% of the available heat is needed. Current heat integration concepts are limited in the cracked gas heat utilization to at most 80% (in a so-called FEX-SQE or sandwich FEX, wherein the abbreviations FEX and SQE stand for feed effluent heat exchanger and secondary quench heat exchanger) or up to 90% (in a so-called FEX-PQE where the abbreviation PQE stands for primary quench exchanger) and are balanced with low-voltage electrical heating with all disadvantages coming with low voltage systems, for example including transformer and copper losses.

Electrical feed preheating is technically feasible but operational experience is scarce and have not yet been applied on a large industrial scale. Embodiments as proposed herein enable the full use of cracked gas heat for feed preheating to be utilized efficiently and closes the heat gap between heat source and sink by a heat pump mechanism without use of low voltage powered heaters for electric feed preheating, which is in particular relevant for liquid feedstocks like Naphtha and heavier.

Installation of low voltage transformers and the associated copper losses can be avoided by putting the motor of the cycle compressor on medium voltage power. Furthermore, for naphtha cracking, the overall electrical power consumption is significantly reduced by approximately 50% compared to a FEX-PQE based heat integration. For ethane or propane cracking, the power consumption can be even further reduced (by about 85%) as the surplus of cracked gas heat, that is not required for preheating the feed 3, can be converted in an organic rankine cycle (ORC) to shaft power in the above mentioned compander machine. This increase of unit efficiency can only be achieved by eliminating any export of heat from the furnace system

Concepts with high degrees of heat integration rely predominantly on direct heat exchange from cracked gas 1 to feed 5 (feed/effluent quench exchangers, situated either in primary or secondary quench position), bearing the risk for pre-cracking of the hydrocarbon feed 5 on potential hot spots in the heat exchanger used. The novel concept proposed herein avoids the direct heat transfer from cracked gas 1 to feed 5 which adds an additional layer of operational safety to prevent pre-cracking or fouling on the shell side of the quench heat exchanger E1 by utilizing the compressor control. This guarantees a continuous safe effluent quench, which plays a vital role for product selectivity in steam cracking.

New quench heat exchanger prototypes for the primary quench position (FEX-PQE), as are currently discussed among experts, have to be equipped with heat transfer enhancement features such as fluid impingement, turbulence promotion, high-shear-inducing geometry or increased surface area. These features result in high pressure drops on the side where it is located. To maintain product selectivity at a high level, those features must not be located on the side of the reactor effluent 1 (tube inside) but on the side of the feed 5 (shell). However, supply pressure of feed and dilution steam is often limited and with that the allowable pressure drop in the feed preheating route, in particular for a revamp scenario in an existing plant. Only accompanying and extensive measures (e.g. installation of a "Brüden compression" step in the dilution steam route) enable a retrofit with primary feed/effluent quench exchangers. The novel concept avoids these accompanying measures and allows to operate feed and effluent side under conventional process parameters.

A major positive aspect of the embodiments proposed herein is the full use of the high temperature heat of the reactor effluent since the intermediary heat carrier medium does not undergo a phase change in the heat recovery device in contrary to conventional quench designs. Conventional quench exchangers are raising steam, which, when used as a heating medium, is limited with respect to achievable temperature levels. For steam cracking, this temperature is limit is about 300 to 320 °C, depending on the steam pressure level (at most about 120 bar absolute pressure).

However, the intermediary heat carrier medium 2 of the proposed concept is a dense phase or even supercritical medium, that utilizes sensible heat for heat recovery from source and transfer to sink. Therefore, the cycle can cover a broad process temperature range from low temperatures up to 700 to 720°C.

Furthermore, the dense phase of the heat carrier medium is beneficial regarding heat transfer rates in heat exchangers and enables smaller cycle pipe diameters. Despite of the dense or supercritical phase of the medium, an operating pressure level of the cycle (about 60 to 70 bar absolute pressure) is far below conventional super high pressure (SHP) steam systems (at about 110 to 120 bar absolute pressure), which allows lower design pressure for process equipment and piping.

Another aspect that is particularly relevant for electrically heated steam cracking furnaces, i.e. heated reactor F, is that produced steam from cracked gas heat cannot be superheated by the process itself and requires electrical superheating. The use of such steam in steam turbines is from a thermodynamical perspective not recommended as the turbine hardly produces more shaft power than previously spent as electrical duty for the superheating of the steam. If steam is not needed for purposes such as process heating (which is decided by a case by case decision), it is far more efficient to electrify the machine drives of the separation process and transfer the cracked gas heat to the heat carrier cycle as proposed herein.

Another outstanding advantage of concepts proposed herein is the ability to cover such high temperatures, that are out of the application range of conventional hot oil or even molten salt heat carriers. At the same time, the intermediary heat carrier is cooled down by the feed to moderate suction temperatures, that allow state-of-the-art turbocompressor technology based on conventional compressor materials. There are already industrial facilities in operation, in which hot air or nitrogen are compressed as a heat carrier medium in thermal storage cycles (e.g. gridscale thermal battery by Stiesdal & AtlasCopco), operating at similar temperatures in the compressor.

Embodiments as proposed herein may include, alone or in any combination, at least one of the following additional or alternative features.

As indicated above, the field of application may not be restricted to steam cracking but also be suitable for other reaction processes, where reaction heat is to be recovered and transferred to a reactor feed. It may particularly be suitable for processes where the feed preheating duty exceeds the available reactor effluent heat duty and the cycle compressor allows to close the heat gap by its heat pump mechanism.

Hereinbefore, the invention is exemplarily described for the application in an electrically heated cracking furnace environment. However, the invention can also be applied to fired cracking furnaces, in particular to fired furnaces with high levels of air preheating, ideally combined with elevated hydrogen content in the furnace fuel gas (15 to 100 % molar content) application: The amount of heat, that the cycle is able to supply to the feed preheating, no longer has to be provided by flue gas heat. This residual flue gas heat can then be utilized for combustion air preheating.

Steam cracker plants, featuring electric furnace systems with heat integration systems as proposed herein, may further include fired furnaces in a hybrid system architecture.

When applied to steam cracking, embodiments as proposed herein may particularly be combined with a separation train, in which all gas compressors with power duties above 1 MW are driven by electric motors since there is less or no more steam production to drive turbines.

Steam cracker plants, featuring electric furnace systems with heat integration systems recovery according to the present invention, may further include fired furnaces in a hybrid system architecture.

In a brownfield or revamp steam cracker scenario, the invention is preferably applied, when steam production has to be minimized or eliminated for any reason.

Figure 2 illustrates an embodiment of an apparatus 200 in a gaseous feed (ethane, propane) based steam cracker environment. The base embodiment of the intermediary heat carrier cycle can be extended with an organic rankine cycle (ORC), as shown in Figure 2 with organic rankine cycle medium 6. The organic rankine cycle (e.g. using propane as organic rankine cycle medium 6) absorbs the excessive heat from the heat carrier cycle which is not needed for feed 3 preheating in a heat exchanger E5, and converts it into shaft power by expansion via a turbine T1 that may be coupled with cycle compressor C1, as shown.

Residual waste heat below 100 °C can be used for process heating in the separation section or alternatively be transferred to cooling water. Further components of the organic rankine cycle include a heat exchanger E6 provided as an economizer, a heat exchanger E7 configured as a condenser operated with a stream 7 of a cooling medium such as cooling water or process steam, a condensate drum or vessel D1 and an organic rankine cycle pump P1.

For steam crackers with gaseous feedstock, it is envisaged to utilize, instead of utilizing the excessive heat of the intermediary cycle in an organic rankine for minimum shaft power as proposed above, the excessive heat of the cycle for process heating or transferred to other consumers, e.g. thermal energy storages.

Another embodiment as proposed herein for steam crackers with gaseous feed could be the split of the cracked gas quench into multiple separate exchangers: a first quench exchanger supplying heat to the intermediary heat carrier cycle (just sufficient for feed and dilution steam preheating) and a second quench exchanger, that raises super high pressure (SHP) or high pressure (HP) steam for heat supply to the separation section of the steam cracker plant. A tertiary quench exchanger for boiler feed water preheating could be added optionally.

Another embodiment of the invention in steam crackers could be to split the hot reactor effluent from one furnace into two parallel quench routes: one of them supplying sufficient heat to the intermediary heat carrier cycle for feed preheating whereas the parallel route raises SHP or HP steam in conventional quench exchangers.

Another embodiment for feedstock with higher boiling temperatures, e.g. heavy vacuum oil (HVO), gasoil, pyrolysis oil from waste plastic, waxy distillates, etc., is shown in Figure 4 as an apparatus 300.

Heavy feedstock requires higher ratios of hydrocarbon /dilution steam and in addition higher dilution steam superheating for full feed vaporization. Figure 4 illustrates how the proposed heat integration concept can be extended with an electrically heated dilution steam superheater H1 for elevated dilution steam temperatures up to 500 °C.

The higher the boiling range of the feedstock, the more rapid is the heat transfer performance loss due to progressive coking of the quench exchanger over runtime. Ideas to compensate this effect comprise e.g. the operation of the heat carrier cycle at different process parameters such as altering the suction pressure over runtime (e.g. suction valve or IGV throttling leading to increased compressor discharge temperatures. This is to balance out a reduced heat transfer from quench exchanger to cycle and to ensure sufficient heat supply to the feed preheating.

For maximized reliability and availability in steam cracking application, embodiments as proposed herein could be designed in such a way that one intermediate heat carrier cycle is assigned to one cracking furnace. However, if CAPEX is more relevant than availability, it is also feasible to realize a heat integration according to the invention with one heat carrier cycle serving multiple furnace units to save equipment count. Another embodiment could also be based on the operation of one single furnace unit with several heat integration cycles operating in parallel.

Further embodiment in the field of hydrocarbon cracking is the implementation of the heat carrier cycle at an autothermal cracking reactor for the production of light olefins, such as ethylene and propylene.

Another field of application is the synthesis gas technology: E.g. an embodiment of the invention could be the high temperature heat integration in an autothermal reforming process, in particularly if steam production is not or only to a certain extent required. Same applies to an electrically heated steam methane reformer (e-SMR) to reduce or eliminate undesired steam production and/or reduce or even eliminate fired feed preheating. Also conventional steam methane reforming or partial oxidation reaction-based process can reduce the fired feed preheating duty and with it the CO2 emissions by implementation of the proposed invention.

## Claims

1. A method for producing a reaction product using an apparatus (100, 200, 300) comprising a heated reactor (F), wherein a reaction feed (5) is supplied to the reactor and a reactor effluent (1) is withdrawn from the reactor (F), wherein heat of the reactor effluent (1) is transferred to a heat carrier medium (2), wherein heat of the heat carrier medium (2) is transferred to a heat sink, and wherein the heat carrier medium (2) is provided in a cycle in which the heat carrier medium (2) is compressed using a cycle compressor (C1).

2. The method according to claim 1, wherein the reaction feed (5) or a part or component thereof is used as the heat sink.

3. The method according to claim 1 or 2, wherein compression heat generated when the heat carrier medium (2) is compressed using the cycle compressor (C1) is at least in part transferred with the heat carrier medium (2) to the heat sink.

4. The method according to any one of claims 1 to 3, wherein the reactor (F) is used to perform an endothermic reaction process to produce the reaction product.

5. The method according to claim 4, wherein the reaction process is selected from a steam cracking process, an autothermal reforming process, a steam methane reforming process or combinations thereof.

6. The method according to claim 4 or 5, wherein the reactor (F) is a fired reactor in which a flue gas is produced, wherein heat of the flue gas is used for at least one of process and boiler feed water/steam heating and combustion air preheating.

7. The method according to claim 4 or 5, wherein the reactor (F) is an electrically heated reactor not producing a flue gas.

8. The method according to any one of the preceding claims, wherein the heat carrier medium (2) is provided in the cycle in a dense gas phase or supercritical state and does not undergo a phase change in the heat cycle.

9. The method according to any one of the preceding claims, wherein a temperature profile of the heat carrier medium (2) in the cycle is provided such that a temperature of the heat carrier medium (2) in a heat exchanger (E1) used for the transfer of heat of the reactor effluent (1) to the heat carrier medium (2) does not exceed a predetermined temperature value.

10. The method according to claim 8 or 9, wherein the heat carrier medium (2) comprises at least one of argon, helium, nitrogen, air and a hydrocarbon, and/or wherein further heat of the reactor effluent (1) is transferred to a further medium, and/or wherein a pressure drop of the heat carrier medium (2) in the cycle is 5 to 20 bar.

11. The method according to any one of the preceding claims wherein the transfer of the heat from the reactor effluent (1) to the heat carrier medium (2) is performed using a heat exchanger (E1) in which the reactor effluent (1) supplied to and cooled in an inner tube and the heat carrier medium (2) is supplied to and heated in an outer tube disposed about the inner tube to enclose an annulus about the inner tube, the annulus comprising features for heat transfer enhancement.

12. The method according to claim 11, wherein the features for heat transfer enhancement include features for fluid impingement, turbulence promotion, high shear-inducing geometry, or increased surface area.

13. The method according to any one of the preceding claims, wherein heat of the heat carrier medium is transferred to an organic rankine cycle using an expander (T1) driving the cycle compressor (C1).

14. An apparatus (100, 200, 300) for producing a reaction product, comprising a heated reactor (F), wherein the apparatus (100, 200, 300) is configured to supply a reaction feed (5) to the reactor (F), to withdraw a reactor effluent (1) from the reactor (F), to transfer heat of the reactor effluent (1) to a heat carrier medium (2), to transfer heat of the heat carrier medium (2) to a heat sink, and to provide the heat carrier medium (2) in a cycle in which the heat carrier medium (2) is compressed using a cycle compressor (C1).

15. The apparatus (100, 200, 300) according to claim 14 configured for performing a method according to any one of claims 1 to 13.
